# EUROPEAN PATENT SPECIFICATION

(11) **EP 3 327 817 B1**
(45) Date of publication and mention of the grant of the patent: **06.11.2019**
(21) Application number: 16201061.5
(22) Date of filing: 29.11.2016
(51) Int. Cl.: H01M 2/02, H01M 2/10

(54) **WALL STRUCTURE OF A BATTERY CELL, BATTERY SUBMODULE, BATTERY MODULE OR BATTERY SYSTEM**
WANDSTRUKTUR EINER BATTERIEZELLE, BATTERIEUNTERMODUL, BATTERIEMODUL ODER BATTERIESYSTEM
STRUCTURE DE PAROI D'UNE CELLULE DE BATTERIE, SOUS-MODULE DE BATTERIE, MODULE DE BATTERIE OU SYSTÈME DE BATTERIE

(43) Date of publication of application: 30.05.2018
(73) Proprietor: Samsung SDI Co., Ltd., Giheung-gu Yongin-si, Gyeonggi-do 17084 (KR)
(72) Inventor: GOLUBKOV, Andrej, 8010 Graz (AT)
(74) Representative: Gulde & Partner

(56) References cited:
- DE-A1-102013 208 135
- US-A1- 2006 073 383
- US-A1- 2016 133 883

## Description

### Field of the Invention

The present invention relates to a wall structure, particularly a multilayer wall structure, of one of a battery cell, battery submodule, battery module or battery system. The present invention further relates to a battery cell, a battery submodule, a battery module and a battery system comprising a respective case with a multilayer wall structure and with improved heat dissipation characteristics and improved resistance against electric arcs.

### Technological Background

A rechargeable or secondary battery differs from a primary battery in that it can be repeatedly charged and discharged, while the latter provides only an irreversible conversion of chemical to electrical energy. Low-capacity rechargeable batteries are used as power supply for small electronic devices, such as cellular phones, notebook computers and camcorders, while high-capacity rechargeable batteries are used as the power supply for hybrid vehicles and the like.

In general, rechargeable batteries include an electrode assembly including a positive electrode, a negative electrode, and a separator interposed between the positive and negative electrodes, a case receiving the electrode assembly, and an electrode terminal electrically connected to the electrode assembly. An electrolyte solution is injected into the case in order to enable charging and discharging of the battery via an electrochemical reaction of the positive electrode, the negative electrode, and the electrolyte solution. The shape of the case, e.g. cylindrical or rectangular, depends on the battery's intended purpose.

Rechargeable batteries may be used as a battery module formed of a plurality of unit battery cells coupled in series and/or in parallel so as to provide a high energy density, e.g. for motor driving of a hybrid vehicle. That is, the battery module is formed by interconnecting the electrode terminals of the plurality of unit battery cells depending on a required amount of power and in order to realize a high-power rechargeable battery, e.g. for an electric vehicle.

Battery modules can be constructed either in block design or in modular design. In block designs each battery is coupled to a common current collector structure and a common battery management system and the unit thereof is housed within a case. In modular designs, pluralities of battery cells are connected to form submodules and several submodules are connected to form the module. The battery management functions can then be at least partially realized on either module or submodule level and thus interchangeability can be improved. One or more battery modules are mechanically and electrically integrated, equipped with a thermal management system and set up for communication with one or more electrical consumers in order to form a battery system.

The mechanical integration of a battery system requires appropriate mechanical connection of the individual components, e.g. of battery submodules, among themselves and with a structure of the system providing the electrical consumers, e.g. a vehicle. These connections must be designed to remain functional and save during the average service life of the battery system and under the stresses provided during its use. At the same time installation space and interchangeability requirements must be met, especially in mobile applications.

Mechanical integration of battery modules can be achieved by providing a carrier plate, e.g. ground plate, and by positioning individual battery cells or submodules thereon. Fixing the battery cells or submodules can be achieved e.g. by fitted depressions in the carrier plate, by mechanical interconnectors as bolts or screws or by confining the cells or submodules. Confinement can be achieved by fastening side plates to lateral sides of the carrier plate and/or by providing a further carrier plate atop and fixing it to the first carrier plate and/or the side plates. Thus, multilevel battery modules can be constructed, wherein the carrier plates and/or side plates may contain coolant ducts for providing cooling of the cells or submodules.

Mechanical integration of the battery submodules can be achieved by using mechanically reinforced electrical connectors or by fastening the battery cells onto carrier beams or struts additionally to the electrical connectors. Additionally or alternatively the submodules can comprise individual casings covering some or all of the surfaces of a plurality of aligned battery cells. Such battery submodule might be arranged in a battery module, e.g. onto a carrier plate, within these individual casings.

Battery submodules, battery modules and/or battery systems thus might comprise a case for confining its constituents, i.e. battery cells, battery submodules or battery modules. On the one hand such case shall provide protection from environmental influences, e.g. mechanical, thermal or electrical shocks and shall further protect the environment from hazardous effects of one or more malfunctioning battery cells. On battery cell level, cases usually comprise metal or plastic cases that shall provide mechanical protection, electric isolation and ensure heat dissipation. For some battery types flexible pouches might be used instead of hard cylindrical or rectangular cans. The cases or pouches usually comprise a metal layer to provide mechanical strength and heat distribution and may further comprise electrically insulating coatings on an inner or outer surface of the metal layer. A wall structure according to the prior art. is disclosed in US 2006/0083984 A1 and in DE 10 2013 208135 A1 and a battery case according to the prior art is disclosed; in KR 20080049548 A1.

On battery submodule, battery module and battery system level, housing is usually provided by metal or plastic cases made of sheet metal, fiber-reinforced polymer or injection molded aluminum shells. Such cases shall provide mechanical reinforcement and may also comprise electrically insulating coatings. As an increase of the internal temperature can lead to abnormal reactions occurring within one or more battery cells, the metal cases may be further configured to efficiently emit, discharge and/or dissipate heat generated from its interior to its exterior. In order to provide a sufficient heat discharge the cases are typically provided with comparable low wall strength, which also reduces the weight of the casings.

However, the relatively thin walls of the cases of a battery cell, battery submodule, battery module or battery system might melt in response to locally increased temperatures, e.g. due to one or more malfunctioning battery cells. Particularly, malfunctioning cells might lead to electric arcs within the case that lead to drastically increased temperatures within small regions of the case when impinging on the case. These arcs may thus damage and ultimately breach the case. Hazardous gases may then be effluent from the damaged case and might be toxic to users, e.g. of a vehicle, and/or may ignite and cause further damage.

It is thus an object of the present invention to overcome or reduce at least some of the drawbacks of the prior art and to provide a wall structure for a case of one of a battery cell, a battery submodule, a battery module or a battery system with improved heat dissipation characteristics and improved resistance against electric arcs.

### Summary of Invention

A first aspect of the present invention relates to a wall structure of a case of one selected from a group comprising a battery cell, a battery submodule, a battery module and a battery system. The wall structure comprises a multilayer structure with a first layer facing an inner side of the case, a third layer facing an outer side of the case and a second layer in between the first layer and the third layer. In other words, the first, second and third layer are arranged above or next to each other in this ascending order. Further layers may be disposed on or between the so ordered first, second and third layers. According to the present invention, the first layer is configured for electrically insulating the second layer from an inner portion of the case. In other words, the first layer is an electrically insulating layer, comprising an electrically insulating material. The second layer comprises an ablative material and is configured for thermally shielding the third layer. In other words, the second layer is a thermally insulating layer comprising an ablative material and is configured to delay heat transport from an inner side of the case/the first layer to an outer side of the case/the third layer. The third layer comprises a thermal conductivity that is higher than that of the second layer. The third layer is thus configured to distribute any heat that is transferred to the third layer from an inner side of the case to a larger area of the third layer/an outside of the case.

Another aspect of the present invention relates to a battery cell, comprising an electrode assembly, a case for accommodating the electrode assembly, and a cap assembly for sealing an opening of the case. A bottom surface and/or a side wall of the case and/or the cap assembly comprise a multilayer wall structure. The multilayer wall structure comprises a first layer facing an inner side of the battery cell, a third layer facing an outer side of the battery cell and a second layer in between the first layer and the third layer. In other words, the first, second and third layer are arranged above or next to each other in this ascending order. Further layers may be disposed on or between the so ordered first, second and third layers. According to the present invention, the first layer is configured for electrically insulating the second layer from the electrode assembly. In other words, the first layer is an electrically insulating layer, comprising an electrically insulating material. The second layer comprises an ablative material and is configured for thermally shielding the third layer. In other words, the second layer is a thermally insulating layer comprising an ablative material and is configured to delay heat transport from an inner side of the battery cell to an outer side of the battery cell. The third layer comprises a thermal conductivity that is higher than that of the second layer. The third layer is thus configured to distribute heat that is transferred to the third layer from an inner side of the battery cell to a larger area of the third layer.

A further aspect of the present invention relates to a battery submodule, comprising a plurality of aligned battery cells and a battery submodule case with a pair of submodule front plates facing each other and being connected to a plurality of submodule side plates facing each other. The battery submodule case is housing the plurality of aligned battery cells. A submodule front plate and/or a submodule side plate comprise a multilayer wall structure with a first layer facing the plurality of battery cells, a third layer facing an outer side of the battery submodule case and a second layer in between the first layer and the third layer. In other words, the first, second and third layer are arranged above or next to each other in this ascending order. Further layers may be disposed on or between the so ordered first, second and third layers. According to the present invention, the first layer is configured for electrically insulating the second layer from the plurality of battery cells. In other words, the first layer is an electrically insulating layer, comprising an electrically insulating material. The second layer comprises an ablative material and is configured for thermally shielding the third layer. In other words, the second layer is a thermally insulating layer comprising an ablative material and is configured to delay heat transport from an inner side of the battery submodule case to an outer side of the battery submodule case. The third layer comprises a thermal conductivity that is higher than that of the second layer. The third layer is thus configured to distribute any heat that is transferred to the third layer from an inner side of the battery submodule case to a larger area of the third layer or an outside of the battery submodule case.

Another aspect of the present invention relates to a battery module, comprising a plurality of battery cells and/or a plurality of battery submodules disposed on or in a battery module case with a ground plate. The ground plate or another side wall of the battery module case comprises a multilayer wall structure. The wall structure comprises a first layer facing the plurality of battery cells and/or the plurality of battery submodules, a third layer facing an outer side of the battery module case and a second layer disposed in between the first layer and the third layer. In other words, the first, second and third layer are arranged above or next to each other in this ascending order. Further layers may be disposed on or between the so ordered first, second and third layers. According to the present invention, the first layer is configured for electrically insulating the second layer from the plurality of battery cells and/or the plurality of battery submodules. In other words, the first layer is an electrically insulating layer, comprising an electrically insulating material. The second layer comprises an ablative material and is configured for thermally shielding the third layer. In other words, the second layer is a thermally insulating layer comprising an ablative material and is configured to delay heat transport from an inner side of the battery module case to an outer side of the battery module case. The third layer comprises a thermal conductivity that is higher than that of the second layer. The third layer is thus configured to distribute any heat that is transferred to the third layer from an inner side of the battery module case to a larger area of the third layer or an outside of the battery module case.

A further aspect of the present invention relates to a battery system, comprising a plurality of battery cells and/or a plurality of battery submodules and/or at least one battery module and a battery system case. A side wall of the battery system case comprises a multilayer wall structure with a first layer facing the plurality of battery cells and/or the plurality of battery submodules and/or the at least one battery module, a third layer facing an outer side of the battery system case and a second layer disposed in between the first layer and the third layer. In other words, the first, second and third layer are arranged above or next to each other in this ascending order. Further layers may be disposed on or between the so ordered first, second and third layers. According to the present invention, the first layer is configured for electrically insulating the second layer from the plurality of battery cells and/or the plurality of battery submodules and/or the at least one battery module. In other words, the first layer is an electrically insulating layer, comprising an electrically insulating material. The second layer comprises an ablative material and is configured for thermally shielding the third layer. In other words, the second layer is a thermally insulating layer comprising an ablative material and is configured to delay heat transport from an inner side of the battery system case to an outer side of the battery system case. The third layer comprises a thermal conductivity that is higher than that of the second layer. The third layer is thus configured to distribute any heat that is transferred to the third layer from an inner side of the battery system case to a larger area of the third layer or an outside of the battery system case.

The case of a battery cell, submodule, module or system with a multilayer wall structure according to the present invention can tolerate electric arcing inside the case. The multilayer wall structure consists at least of three layers, wherein the first layer is facing an inner side of the case and would be exposed to a possible arcing inside the case during a failure. In order to prevent short circuits with further components inside the case that are distant to the arc impinging on the case, the first layer is an electrically insulating layer. In order to prevent the arc from breaching the case, the second layer is a thermal shielding layer comprising an ablative material. Physically, the ablative material is configured to dissipate a large amount of thermal energy by sacrifice of material. A plurality of physical processes may participate in this highly efficient heat dissipation, for example charring and pyrolysis. The second layer may further comprise a low thermal conductivity. The third layer is configured to provide sufficient mechanical stability to the case and may be identical to a conventional case of a battery cell, submodule, module or system. In order to further prevent the third layer to become mechanically unstable, the third layer comprises a thermal conductivity that is higher than that of the second layer for distributing any heat that passes the second layer to a wider surface area of the third layer. Thereby peak temperatures and the danger of softening or even melting of the third layer are decreased.

According to a preferred embodiment of the present invention, the ablative material of the second layer is configured to transit into an ablation process at a critical temperature of or below 600°C, preferably of or below 500°C and particularly preferred of or below 400°C. The ablation process may comprise a variety of physical processes that occur in response to the ablation material reaching the critical temperature. The processes might comprise phase changes such as melting, vaporization and sublimation; heat conduction and heat storage in the ablative material substrate; heat convection in a liquid layer; transpiration of gases and liquids and subsequent heat absorption from the surface into a boundary layer and endothermic chemical reactions. The classification of ablative materials thus occurs according to a dominant ablation mechanism, while the other mechanism might still exist in the ablation material. In the art it is usually distinguished between three main types of ablating materials, i.e. subliming or melting ablators, charring ablators and intumescent ablators.

Intumescent ablators are characterized by that they start to foam above a critical temperature. The drastic increase in volume related to the foaming is hard to handle in a case structure and could lead to a breaching of the case itself. Thus, melting ablators and charring ablators are the preferred ablation materials for the wall structure according to the invention. In charring ablators thermal energy is mainly dissipated due to endothermic reactions, e.g. pyrolysis, wherein a main portion of the ablative material remains solid. Thus, charring ablators are particularly preferred for the wall structure according to the invention but might be used in combination with melting ablators as reinforcement materials.

Preferably, the second layer is fully enclosed between the first layer and the third layer. Particularly preferred, the second layer is fully enclosed between the first and the second layer in a gas tight fashion. This might be realized by fully covering the whole surface of a case with each of the first layer, the second layer and the third layer. Alternatively, the second layer is disposed only partially on a surface of the first surface, wherein the third layer is disposed on a full surface of the first layer and of the second layer. Thus in a peripheral region of the multilayer wall structure the first layer is in direct contact with the third layer and thus envelops the second layer in a gas tight fashion. By enclosing the second layer, oxidation processes at a temperature above a critical or decomposition temperature and/or ignition of ablation gases may be avoided. Thus, fully enclosing the second layer by the first layer and the third layer may be a prerequisite for initializing charring and/or pyrolysis of a charring ablator. A multilayer structure according to the present invention might be produced by providing a conventional case of the respective structure (cell, submodule, module, system) as a third layer in a first step, by depositing a second layer on an inner side of the third layer in a second step and by depositing a first layer on an inner side of the second layer in a third step.

According to a preferred embodiment of the present invention, the ablative material comprises a charring ablative material with a decomposition temperature below 600°C, preferably below 500°C and particularly preferred below 400°C. In other words charring and/or pyrolysis of the charring ablation material might be initialized at the decomposition temperature. Due to this low decomposition temperature, melting or destabilization of the third layer, e.g. consisting of or comprising aluminum, can be reliably prevented. Herein, decomposition refers to a reaction temperature at which endothermic chemical decomposition starts to occur. Thereby the organic matrix of the virgin ablative material pyrolizes within a decomposition region into carbonized material and some gaseous products. Finally, char is produced from the organic matrix. The decomposition region separates the virgin material from a charred region and passes through the ablative material as a boundary layer. The passage of the boundary layer further improves thermal insulation and reduces convective heat transfer. Further, the ablation gases impede the radiative heat transport. Thus, the ablative material acts as a heat sink, absorbing nearly all of the incident heat flux.

Particularly preferred, the ablative material of second layer is configured to transit into an ablation process, preferably into endothermic decomposition such as charring and pyrolysis, in response to an electric arc impinging the first layer. Electric arcs might comprise high-temperature plasma with temperatures between 5000 K and 50.000 K confined in a very small volume. Thus, the ablative material of the second layer may be also configured to transit into the ablation process at higher temperatures, e.g. at temperatures above 5000°K, above 10.000 K or above 15.000 K. An electric arc inside a case of a battery or the like will impinge very small surface areas of an inner side of the case in random fashion and the probability of an electric arc hitting the same spot repeated times is rather small. Thus, the local sacrifice of the ablative material in response to the impinging arc does not significantly alter the mechanical stability of the second layer. Thus, the second layer as a whole remains mechanically stable during and after arcing within the case. The third layer comprises a heat conductivity that is high compared to the second layer. Thus, the locally increased temperature at the impinging spot is distributed over a wider area in the third layer and the third layer as a whole remains mechanically stable in the case of electric arcing inside the case. Thus, a prolonged service life can be realized using a wall structure according to the invention. However, the case might also be replaced after a single failure and inside arcing.

According to a preferred embodiment, the ablative material might comprise one or more (a composite) of graphite, carbon-fiber-reinforced phenolic, epoxy resin, silicone elastomers, Teflon, quartz, cork and/or nylon. Preferably silicone elastomers, particularly preferred foamed silicone elastomers, are used as ablative material of the second layer. Such charring ablator material might be used in combination with subliming or melting reinforcement materials. Particularly preferred a matrix or a resin of a charring ablator is filled with particles or fibers of a melting ablator. Silicone elastomers or phenolic materials might be used as matrix materials. Particularly preferred, foamed silicone elastomers are loaded with silicon dioxide and iron oxide. Such material decomposes to similar foam of SiO₂, SiC and FeSiO₃.

Alternatively, a charring ablation material might be loaded with silica or nylon in order to provide cooling via transpiration. Carbon-fiber-reinforced phenolic materials are also preferred for the ablative material of the second layer. Exemplarily, the ablative material might comprise a low density epoxy-novolac resin with phenolic micro balloons and silica fiber reinforcement in order to realize a lightweight second layer. Further preferred, a graphite (-fiber) reinforced epoxy composite is used as a cost-effective and low density ablative material. Further preferred, cork might be used as ablative material and glass or mineral particles might be embedded in a matrix of an ablative material, such as a silicone matrix. Particularly preferred, a silicon resin comprising particles of cork, glass and phenolic micro ballons might be used as ablative material of the second layer.

According to a further preferred embodiment, the third layer comprises a metal or a metal alloy. Particularly preferred, the third layer comprises aluminum, alloys of iron (Fe), carbon (C), chromium (Cr), and manganese (Mn) and/or alloys of iron (Fe), carbon (C), chromium (Cr) and nickel (Ni). Thus, the third layer might be identical to a conventional case of a battery or the like. A metal third layer has a good thermal conductivity and thus distributes the heat produced by a spatially restricted electric arcing evenly over a large area. According to the field of use, e.g. in a battery cell or in a case of a battery system comprising hundreds of cells, the third layer comprises a thickness that ensures that the third layer is not easily weakened in response to an increased temperature. Thus, the third layer is able to withstand the overpressure of the gases that are produced inside the case of the battery or the like.

Further preferred, thermally conductive plastic materials or resins may be used for the third layer. The material systems that are suitable for the third layer are identical or similar to the material systems that are suitable for conventional battery cases. The third layer is configured for the following functions: mechanical fixture of the battery components, mechanical protection of critical components during a crash, protection from the environment (moisture and dirt), EMC shielding, heat distribution in case of hotspots, containment of gases that may evolve from the cells and providing mechanical integrity to the case.

According to a preferred embodiment, the first layer comprises a comprises a fiber-reinforced plastic material and is configured for mechanically protecting the second layer. Preferably, the first layer is electrically insulating, ductile and temperature resistant. As the first layer is electrically insulating, no short circuits should occur if a conducting feature, e.g. a bus bar, inside the case is deformed towards the case, i.e. is deformed such that it contacts the case. Thus, the second layer is configured to provide mechanical protection of the second layer and to prevent short circuits when the bus bars touch the inside of the battery housing. According to the field of use, e.g. in a battery cell or in a case of a battery system comprising hundreds of cells, the first layer comprises a thickness that ensures that the second layer can be reliably isolated of voltages occurring inside the case.

In a preferred embodiment, the wall structure according to the present invention is an integral part of a battery case for accommodating an electrode assembly or of a cap assembly for sealing an opening of the battery case. According to this embodiment the first layer is configured for electrically insulating the second layer from the electrode assembly. Further preferred, in this embodiment the first layer comprises a thickness from 20 µm to 50 µm, the second layer comprises a thickness from 100 µm to 1 mm and the third layer comprises a thickness from 200 µm to 2 mm.

In a further preferred embodiment, the wall structure according to the present invention is an integral part of a battery submodule case. The battery submodule case houses a plurality of aligned battery cells and comprises a pair of submodule front plates facing each other and being connected to a plurality of submodule side plates facing each other. In this embodiment, the first layer is configured for electrically insulating the second layer from the plurality of battery cells. Further preferred, in this embodiment the first layer comprises a thickness from 20 µm to 200 µm, the second layer comprises a thickness from 400 µm to 4 mm and the third layer comprises a thickness from 0.5 mm to 2 mm.

In a further preferred embodiment, the wall structure according to the present invention is an integral part of a battery module case that houses a plurality of battery cells and/or a plurality of battery submodules. The battery module case comprises a ground plate and the wall structure may be an integral part of the ground plate. In this embodiment the first layer is configured for electrically insulating the second layer from the plurality of battery cells and/or of battery submodules. Further preferred, in this embodiment the first layer comprises a thickness from 50 µm to 1 mm, the second layer comprises a thickness from 1 mm to 5 mm and the third layer comprises a thickness from 2 mm to 10 mm.

In a further preferred embodiment, the wall structure according to the present invention is an integral part of a battery system case that houses a plurality of battery cells and/or a plurality of battery submodules and/or at least one battery module. In this embodiment, the first layer is configured for electrically insulating the second layer from the plurality of battery cells and/or of battery submodules and/or the at least one battery module. Further preferred, in this embodiment the first layer comprises a thickness from 50 µm to 2 mm, the second layer comprises a thickness from 1 mm to 10 mm and the third layer comprises a thickness from 2 mm to 50 mm.

### Brief Description of the Drawings

Features will become apparent to those of ordinary skill in the art by describing in detail exemplary embodiments with reference to the attached drawings in which:
- Fig. 1: illustrates a schematic perspective view of a battery cell according to an embodiment;
- Fig. 2: illustrates a schematic cross section of a battery cell comprising a multilayer wall structure according to an embodiment;
- Fig. 3: illustrates a schematic perspective view of a battery submodule comprising a multilayer wall structure according to an embodiment;
- Fig. 4: illustrates a schematic perspective view of a battery module case comprising a multilayer wall structure according to an embodiment; and
- Fig. 5: illustrates a schematic perspective view of a battery system comprising a multilayer wall structure according to an embodiment.

### Detailed Description of the Invention

Reference will now be made in detail to embodiments, examples of which are illustrated in the accompanying drawings. Effects and features of the exemplary embodiments, and implementation methods thereof will be described with reference to the accompanying drawings. In the drawings, like reference numerals denote like elements, and redundant descriptions are omitted. As used herein, the term "and/or" includes any and all combinations of one or more of the associated listed items. Further, the use of "may" when describing embodiments of the present invention refers to "one or more embodiments of the present invention." It will be understood that, although the terms "first," "second," "third," etc., may be used herein to describe various elements, components, regions, layers and/or sections, these elements, components, regions, layers and/or sections should not be limited by these terms. These terms are used to distinguish one element, component, region, layer or section from another element, component, region, layer or section. Thus, a first element, component, region, layer or section described below could be termed a second element, component, region, layer or section, without departing from the scope of the present invention.

It will also be understood that when a film, a region, or an element is referred to as being "above" or "on" another film, region, or element, it can be directly on the other film, region, or element, or intervening films, regions, or elements may also be present. Spatially relative terms, such as "beneath," "below," "lower," "under," "above," "upper," and the like, may be used herein for ease of explanation to describe one element or feature's relationship to another element(s) or feature(s) as illustrated in the figures. It will be understood that the spatially relative terms are intended to encompass different orientations of the device in use or in operation, in addition to the orientation depicted in the figures.

As used herein, the term "substantially," "about," and similar terms are used as terms of approximation and not as terms of degree, and are intended to account for the inherent deviations in measured or calculated values that would be recognized by those of ordinary skill in the art. Further, if the term "substantially" is used in combination with a feature that could be expressed using a numeric value, the term "substantially" denotes a range of +/- 5% of the value centered on the value.

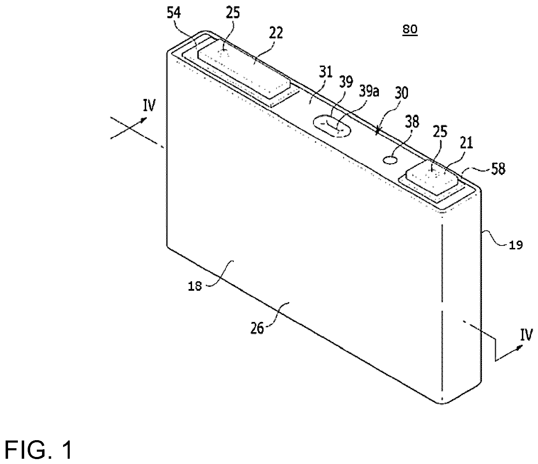

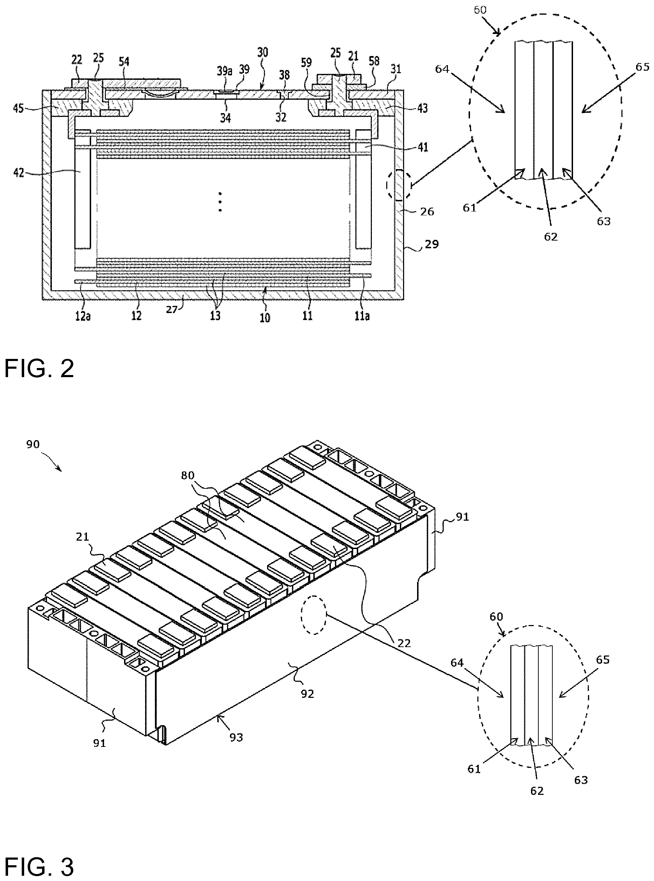

Fig. 1 is a perspective view illustrating a battery cell according to an exemplary embodiment and Fig. 2 is a cross-sectional view taken along the IV-IV line of Fig. 1.

As shown in Figs. 1 and 2, the battery cell 80 according to an embodiment may include an electrode assembly 10, and a case 26 for accommodating the electrode assembly 10, the case 26 containing an electrolyte. The battery cell 80 may also include a cap assembly 30 for sealing an opening of the case 26. The battery cell 80 will be described as a non-limiting example of a lithium ion secondary battery configured to have a prismatic shape.

The electrode assembly 10 may be formed as a jelly roll type electrode assembly by spirally winding a positive electrode 11 and a negative electrode 12 with a separator 13 therebetween. The positive electrode 11 and the negative electrode 12 may respectively include coated regions of current collectors formed of a thin metal foil, on which an active material may be coated, and may respectively include positive and negative electrode uncoated regions 11a and 12a of the current collectors on which no active material is coated.

The positive electrode uncoated region 11 a may be formed on one lateral end of the positive electrode 11 in a longitudinal direction of the positive electrode 11, and the negative electrode uncoated region 12a may be formed on one lateral end of the negative electrode 12 in a longitudinal direction of the negative electrode 12. The electrode assembly 10 may be configured to have a structure including a plurality of sheets of the positive electrode 11, the separator 13, and the negative electrode 12 that are repeatedly stacked.

The electrode assembly 10 may be accommodated in the case 26 together with an electrolyte solution. The electrolyte solution may be made of a lithium salt, such as LiPF6 or LiBF4 with an organic solvent, such as EC, PC, DEC, EMC, or EMC. The electrolyte solution may be in a liquid, solid, or gel state. The case 26 may be configured to have a substantially cuboidal shape, and an opening may be formed at one side thereof.

The case 26 may include a bottom surface 27 having a substantially rectangular shape, and may include a pair of first lateral walls or wide side surfaces 18, 19 and a pair of second lateral walls or narrow side surfaces, connected vertically to end portions of the bottom surface 27, respectively, to form a space for accommodating the electrode assembly 10. The first lateral walls 18, 19 may face each other, and the second lateral walls may be positioned to face each other and may be connected to the first lateral walls 18, 19. A length of an edge at which the bottom surface 27 and a first lateral wall 18, 19 are connected to each other may be longer than that of an edge at which the bottom surface 27 and the second lateral wall are connected to each other. Adjacent first and second lateral walls may enclose an angle of 90°.

The cap assembly 30 may include a cap plate 31 for covering the opening of the case 26 by being bonded to the case 26, and may include a positive terminal 21 (first terminal) and a negative terminal 22 (second terminal), which are externally protruded from the cap plate 31 to be electrically connected to the positive electrode 11 and the negative electrode 12, respectively. The cap plate 31 may include an injection hole 32 and a vent hole 34 that communicate with an interior of the cap assembly 30. The injection hole 32 may be configured to allow the injection of the electrolyte solution, and a sealing cap 38 may be mounted thereon or therein. Further, a vent member 39 including a notch 39a, which may be opened due to a predetermined pressure may be mounted to or in the vent hole 34.

The positive terminal 21 may be electrically connected to the positive electrode 11 via a current collecting tab 41, and the negative terminal 22 may be electrically connected to the negative electrode 12 via a current collecting tab 42. A terminal connecting member 25 may electrically connect the positive terminal 21 and the current collecting tab 41. A gasket 59 for sealing may be mounted between the terminal connecting member 25 and the cap plate 31. A lower insulating member 43, into which the lower portion of the terminal connecting member 25 may be inserted, may be mounted under the cap plate 31. A connecting plate 58 for electrically connecting the positive terminal 21 and the cap plate 31 may be mounted between the positive terminal 21 and the cap plate 31.

Another terminal connecting member 25 may electrically connect the negative terminal 22 and the current collecting tab 42. A gasket for sealing, which is similar to the gasket 59, may be mounted between the negative terminal 22 and the cap plate 31. A lower insulating member 45, which is for insulating the negative terminal 22 and the current collecting tab 42 from the cap plate 31, may be mounted under the cap plate 31. An upper insulating member 54 for electrically insulating the negative terminal 22 and the cap plate 31 may be mounted between the negative terminal 22 and the cap plate 31.

As shown in Fig. 2 a side wall 29 of the battery case 26 might comprise a multilayer structure 60 according to the present invention. However, also the bottom surface 27 or the cap assembly 30 might comprise a multilayer structure 60 according to the present invention.

As shown in Fig. 2, the side wall 60 comprises a first layer 61 facing an inner side 64 of the side wall 29 and facing the electrode assembly 10. The first layer 61 consists of an electrically insulating material such as a cast polypropylene (CPP) and comprises a thickness of 25 µm. The first layer is configured to isolate following layers of the multilayer structure 60 from electrical arc's or sparks produced inside the case 26 by the electrode assembly 10.

The multilayer structure 60 further comprises a third layer 63 facing an outer side 65 of the battery cell 80. The third layer 63 consists of aluminum and comprises a thickness of 0.8 mm and provides mechanical stability to the battery case 26. Particularly, the third layer 63 is configured to resists the pressure inside the battery cell 80 below the threshold pressure actuating the vent member 39. Further, the third layer 63 comprises high thermal conductivity.

The multilayer structure 60 further comprises a second layer 62 that is fully enclosed between the first layer 61 and the third layer 63 and that comprises an ablative material. The second layer 62 comprises a silicone resin matrix with nylon particles disposed in the matrix and with a thickness of 0.5 mm. The second layer 62 is configured to transit into an ablation process at a critical temperature of approximately 400°C. Thus at temperatures above 400°C the ablative material starts to pyrolize, transform into char and thus shields the third layer 63.

Referring to Fig. 3, an exemplary embodiment of a battery submodule 90 according to an embodiment includes a plurality of aligned secondary battery cells 80 with substantially planar shape as shown in Figs. 1, 2. The batteries 80 are aligned with the wide side surfaces 18, 19 of adjacent battery cells 80 facing each other. A pair of submodule front plates 91 is provided to face wide side surfaces 18, 19 of the battery cells 80. The submodule front plates 91 are mechanically coupled to a pair of submodule side plates 92 facing narrow side surfaces of the battery cells 80. The submodule front plates 91 and the submodule side plates 92 constitute a case 93 of the battery submodule 90. The positive and negative electrode terminals 21 and 22 of neighboring battery cells 80 are electrically connected through a bus bar (not shown). Hence, the battery submodule 90 may be used as a power source unit by electrically connecting the plurality of battery cells 80 as one bundle.

As shown in Fig. 3 a submodule side plate 92 comprises a multilayer structure 60 according to the present invention. However, also the submodule front plates 91 may comprise such multilayer structure 60. The multilayer structure 60 of the submodule side plate 92 comprises a first layer 61 facing an inner side 64 of the submodule side plate 92 and the narrow side surfaces of the aligned battery cells 80. The first layer is made of an electrically insulating plastic material such as polyamide or polypropylene and has a thickness of 0.1 mm. Thus, the first layer 61 comprises a thickness that enables it to electrically insulate the following layers 62, 63 from electric arcs produced by one or more of the aligned battery cells 80. The multilayer structure 60 further comprises a third layer 63 made of a thermally conductive polymer or, alternatively, a thermally conductive sheet material such as steel or aluminum and comprising a thickness of 1 mm. Thus, the third layer 63 is configured for mechanically stabilizing the plurality of battery cells 80 and to prevent them from environmental shocks.

A second layer 62 is fully enclosed between the first layer 61 and the third layer 63 and comprises a graphite (-fiber) reinforced epoxy composite with a thickness of 2 mm as ablative material. As the melting temperature of the third layer 63 is approximately at 600°C, the second layer 62 transits into an ablation process, i.e. charring of the epoxy composite at a critical temperature sufficiently below the melting temperature. Thus, the second layer 62 is configured to thermally shield the third layer 63 from electrical arcs impinging on the first layer 61.

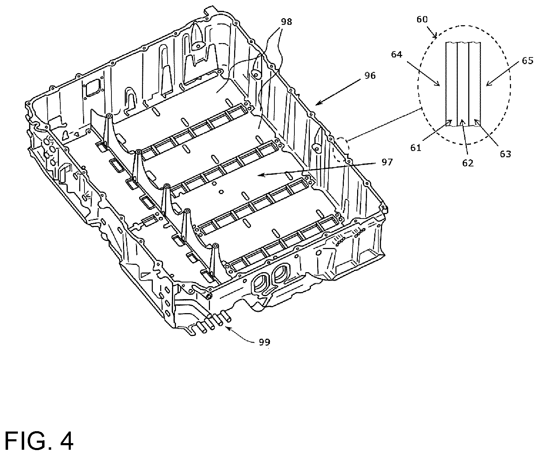

A plurality of battery submodules 90 as shown in Fig. 3 may be arranged within a case 96 of a battery module to form a battery module. Fig. 4 illustrates a view on an embodiment of a case 96 for a battery module including a ground plate 97 on which the battery cells 80 will be placed. In particular, the ground plate 97 includes a number of assembling areas 98 with one battery submodule 90 being arranged in each assembling area 98. The ground plate 97 further comprises embedded cooling tubes 99 integrated in the ground plate 97. A sidewall or the ground plate of the battery module case 96 might comprise a multilayer structure 60 according to the present invention.

As shown in Fig. 4, a side wall of the battery module case 96 comprises a multilayer wall structure 60 according to the present invention with a first layer 61 facing an inner side 64 of the battery module case 96. The first layer 61 is made of an insulating plastic material and comprises a thickness of 1 mm in order to provide sufficient electrically insulation with respect to electric arcs possibly produced by one or more failing cells of a battery module. A third layer 63 is facing an outer side 65 of the battery module case 96 and is made of casted aluminum with a thickness of ...0.7 cm. The thickness is chosen to be sufficient for providing mechanical stability for the plurality of battery cells and/or battery submodules disposed in the assembling areas 98. The cooling tubes 99 are solely embedded in the third layer 63. A second layer 62 is fully enclosed by the first layer 61 and the third layer 63 and comprises a silicon resin as matrix of a charring ablative material with nylon fibers as melting ablator disposed therein. The second layer comprises a thickness of 4 mm in order to provide sufficient thermal shielding with respect to electric arcs possibly produced by one or more failing cells of a battery module.

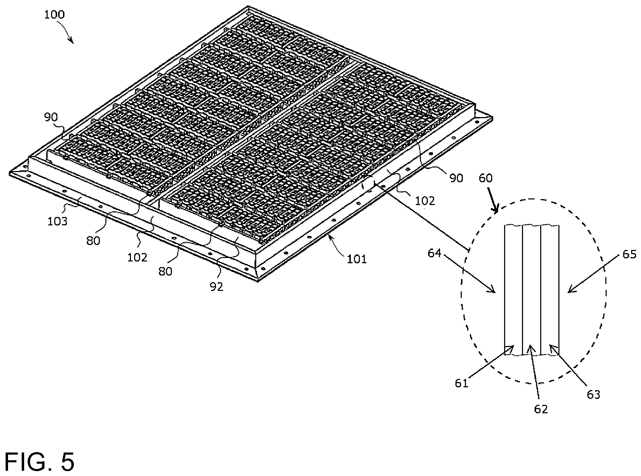

Referring to Fig. 5 a battery system 100 according to an embodiment comprises a plurality of battery submodules 90 as illustrated in the Fig. 3. Four rows of battery submodules 90, each comprising nine battery submodules 90 are disposed in a case 101 of the battery system 100. The battery system case 101 comprises sidewalls 102, a ground plate 103 welded to the side walls 102 and a cover (not shown). The battery system 100 comprises a first and/or second E/E box (not shown) for controlling voltage and current of the battery submodules 90. The E/E box may comprise a battery management unit (BMU), an high voltage connector, an input and/or fuse, a relay, a current sensor, an electromagnetic compatibility filter (EMC-Filter), a precharge relay and/or resistor and/or an HV interface.

At least one sidewall 102, the ground plate 103 or the cover (not shown) of the battery system case 101 might comprise a multilayer wall structure 60 according to the present invention.

As shown in Fig. 5 at least one sidewall 102, preferably each of the sidewalls 102, of the battery system case 101 comprises a first layer 61 facing an inner side 64 of the battery system case 101 and the plurality of battery submodules 90. The first layer 61 is made of a mixture of ceramic particles and an adhesive resin as an electrical insulation material and comprises a thickness of 2 mm. Thus, the first layer 61 is configured to electrically shield the second 62 and third layer 63 from electric arcs produced by one or more malfunctioning battery submodules 90. A third layer 63 of the wall structure 60 faces an outer side of the battery system case 101 and is made of an extruded aluminum profile with a thickness of 2 cm. Thus the sidewall 102 is suitable for being assembled to the battery system case 101 for providing mechanical integrity to the battery system 100. A second layer 62 is fully enclosed by the first layer 61 and the third layer 63 and comprises a silicon resin comprising phenolic micro balloons, i.e. microscopic spheres made of or containing a phenolic substance as an ablative material. The second layer 62 has a thickness of 5 mm in order to provide sufficient thermal shielding with respect to electric arcs possibly produced by one or more failing submodules 90 of the battery system 100.

### Reference signs

- 100: battery system
- 90: battery submodule
- 80: battery cell

- 10: electrode assembly
- 11: positive electrode
- 11a: positive electrode uncoated region
- 12: negative electrode
- 12a: negative electrode uncoated region
- 13: separator
- 18: first lateral side surface
- 19: second lateral side surface
- 21: positive cell terminal (first terminal)
- 22: negative cell terminal (second terminal)
- 25: terminal connecting member
- 26: case
- 27: bottom surface
- 29: battery case side wall

- 30: cap assembly
- 31: cap plate
- 32: injection hole
- 34: vent hole
- 38: sealing cap
- 39: vent member
- 39a: notch
- 41, 42: current collecting tab
- 43, 45: lower insulating member
- 54: upper insulating member
- 58: connecting plane
- 59: gasket

- 60: multilayer structure
- 61: first layer
- 62: second layer
- 63: third layer
- 64: case inner side
- 65: case outer side

- 91: submodule front plate
- 92: submodule side plate
- 93: submodule case

- 96: battery module case
- 97: ground plate
- 98: assembly area
- 99: cooling tube

- 101: battery system case
- 102: battery system side wall
- 103: battery system ground plate

## Claims

1. A wall structure (60) of a case (26, 30, 93, 96, 101) of one selected of a battery cell (80), a battery submodule (90), a battery module and a battery system (100), comprising
a multilayer structure (60) with a first layer (61) facing an inner side (64) of the case (26, 93, 96, 101), a third layer (63) facing an outer side (65) of the case (26, 30, 93, 96, 101) and a second layer (62) in between the first layer (61) and the third layer (63),
wherein the first layer (61) is configured for electrically insulating the second layer (62) from an inner portion of the case (26, 30, 93, 96, 101), the second layer (62) comprises an ablative material and is configured for thermally shielding the third layer (63), and the third layer (63) comprises a thermal conductivity that is higher than that of the second layer (62).

2. A wall structure according to claim 1, **characterized in that** the ablative material of the second layer (62) is configured to transit into an ablation process at a temperature below 600°C and/or has a decomposition temperature below 600°C.

3. A wall structure according to claim 1 or 2, **characterized in that** the ablative material of the second layer (62) is configured to transit into an ablation process in response to an electric arc impinging the first layer (61).

4. A wall structure according to claim 2 or 3, **characterized in that** the ablation process comprises pyrolysis or charring of a material of the second layer (62).

5. A wall structure according to any one of the preceding claims, **characterized in that** the second layer (62) is fully enclosed between the first layer (61) and the third layer (63).

6. A wall structure according to any one of the preceding claims, **characterized in that** the ablative material comprises one or a composite of graphite, carbon-fiber-reinforced phenolic, epoxy resin, silicone elastomers, Teflon, quartz, cork and/or nylon.

7. A wall structure according to any one of the preceding claims, **characterized in that** the third layer (63) comprises a metal or a metal alloy.

8. A wall structure according to claim 6, **characterized in that** the third layer (63) comprises aluminum, alloys of iron (Fe), carbon (C), chromium (Cr), and manganese (Mn) and/or alloys of iron (Fe), carbon (C), chromium (Cr) and nickel (Ni).

9. A wall structure (60) according to any one of the preceding claims, **characterized in that** the third layer (63) is configured to provide mechanical integrity to the case (26, 30, 93, 96, 101).

10. A wall structure (60) according to any one of the preceding claims, **characterized in that** the first layer (61) comprises a fiber-reinforced plastic material.

11. A wall structure (60) according to any one of the preceding claims, **characterized in that** the material of the first layer (61) has a melting point above 200°C.

12. A wall structure of a battery cell (80) according to any one of claims 1 to 11,
wherein the wall structure is an integral part of a battery case (26) for accommodating an electrode assembly (10) or of a cap assembly (30) for sealing an opening of the battery case (26), and
wherein the first layer (61) is configured for electrically insulating the second layer (62) from the electrode assembly (10).

13. A wall structure of a battery submodule (90) according to any one of claims 1 to 11,
wherein the wall structure is an integral part of a battery submodule case (93) housing a plurality of aligned battery cells (80) and comprising a pair of submodule front plates (91) being connected to a plurality of submodule side plates (92), and
wherein the first layer (61) is configured for electrically insulating the second layer (62) from the plurality of battery cells (80).

14. A wall structure of a battery module according to any one of claims 1 to 11,
wherein the wall structure is an integral part of a battery module case (96) housing a plurality of battery cells (80) and/or a plurality of battery submodules (90) and comprising a ground plate (97), and
wherein the first layer (61) is configured for electrically insulating the second layer (62) from the plurality of battery cells (80) and/or of battery submodules (90).

15. A wall structure of a battery system (100) according to any one of claims 1 to 11,
wherein the wall structure is an integral part of a battery system case (101) housing a plurality of battery cells (80) and/or a plurality of battery submodules (90) and/or at least one battery module, and
wherein the first layer (61) is configured for electrically insulating the second layer (62) from the plurality of battery cells (80) and/or of battery submodules (90) and/or the at least one battery module.

## Patentansprüche

1. Eine Wandstruktur (60) eines Gehäuses (26, 30, 93, 96, 101) von einem ausgewählt aus einer Batteriezelle (80), einem Batterieuntermodul (90), einem Batteriemodul und einem Batteriesystem (100), aufweisend
eine Mehrschichtstruktur (60) mit einer ersten Schicht (61), die einer Innenseite (64) des Gehäuses (26, 93, 96, 101) zugewandt ist, einer dritten Schicht (63), die einer Außenseite (65) des Gehäuses (26, 30, 93, 96, 101) zugewandt ist, und einer zweiten Schicht (62) zwischen der ersten Schicht (61) und der dritten Schicht (63),
wobei die erste Schicht (61) konfiguriert ist, um die zweite Schicht (62) von einem inneren Abschnitt des Gehäuses (26, 30, 93, 96, 101) elektrisch zu isolieren, die zweite Schicht (62) ein ablatives Material aufweist und konfiguriert ist, um die dritte Schicht (63) thermisch abzuschirmen, und die dritte Schicht (63) eine Wärmeleitfähigkeit, die höher als die der zweiten Schicht (62) ist, aufweist.

2. Eine Wandstruktur nach Anspruch 1, **dadurch gekennzeichnet, dass** das ablative Material der zweiten Schicht (62) konfiguriert ist, um bei einer Temperatur unter 600°C in einen Ablationsprozess überzugehen, und/oder eine Zersetzungstemperatur unter 600°C aufweist.

3. Eine Wandstruktur nach Anspruch 1 oder 2, **dadurch gekennzeichnet, dass** das ablative Material der zweiten Schicht (62) konfiguriert ist, um in Reaktion auf einen elektrischen Lichtbogen, der auf die erste Schicht (61) trifft, in einen Ablationsprozess überzugehen.

4. Eine Wandstruktur nach Anspruch 2 oder 3, **dadurch gekennzeichnet, dass** der Ablationsprozess eine Pyrolyse oder Verkohlung eines Materials der zweiten Schicht (62) aufweist.

5. Eine Wandstruktur nach einem der vorhergehenden Ansprüche, **dadurch gekennzeichnet, dass** die zweite Schicht (62) vollständig zwischen der ersten Schicht (61) und der dritten Schicht (63) eingeschlossen ist.

6. Eine Wandstruktur nach einem der vorstehenden Ansprüche, **dadurch gekennzeichnet, dass** das ablative Material eines oder einen Verbund aus Graphit, kohlenstofffaserverstärktem Phenol, Epoxidharz, Silikonelastomeren, Teflon, Quarz, Kork und/oder Nylon aufweist.

7. Eine Wandstruktur nach einem der vorhergehenden Ansprüche, **dadurch gekennzeichnet, dass** die dritte Schicht (63) ein Metall oder eine Metalllegierung aufweist.

8. Eine Wandstruktur nach Anspruch 6, **dadurch gekennzeichnet, dass** die dritte Schicht (63) Aluminium, Legierungen aus Eisen (Fe), Kohlenstoff (C), Chrom (Cr) und Mangan (Mn) und/oder Legierungen aus Eisen (Fe), Kohlenstoff (C), Chrom (Cr) und Nickel (Ni) aufweist.

9. Eine Wandstruktur (60) nach einem der vorhergehenden Ansprüche, **dadurch gekennzeichnet, dass** die dritte Schicht (63) konfiguriert ist, um dem Gehäuse (26, 30, 93, 96, 101) mechanische Integrität zu verleihen.

10. Eine Wandstruktur (60) nach einem der vorhergehenden Ansprüche, **dadurch gekennzeichnet, dass** die erste Schicht (61) ein faserverstärktes Kunststoffmaterial aufweist

11. Eine Wandstruktur (60) nach einem der vorhergehenden Ansprüche, **dadurch gekennzeichnet, dass** das Material der ersten Schicht (61) einen Schmelzpunkt oberhalb von 200°C aufweist.

12. Eine Wandstruktur einer Batteriezelle (80) nach einem der Ansprüche 1 bis 11,
wobei die Wandstruktur ein integraler Bestandteil eines Batteriegehäuses (26) zum Aufnehmen einer Elektrodenanordnung (10) oder einer Abdeckanordnung (30) zum Abdichten einer Öffnung des Batteriegehäuses (26) ist, und
wobei die erste Schicht (61) konfiguriert ist, um die zweite Schicht (62) von der Elektrodenanordnung (10) elektrisch zu isolieren.

13. Eine Wandstruktur eines Batterieuntermoduls (90) nach einem der Ansprüche 1 bis 11,
wobei die Wandstruktur ein integraler Bestandteil eines Batterieuntermodulgehäuses (93) ist, das eine Vielzahl ausgerichteter Batteriezellen (80) aufnimmt und ein Paar Untermodulvorderplatten (91), die mit einer Vielzahl von Untermodulseitenplatten (92) verbunden sind, aufweist, und
wobei die erste Schicht (61) konfiguriert ist, um die zweite Schicht (62) von der Vielzahl der Batteriezellen (80) elektrisch zu isolieren.

14. Eine Wandstruktur eines Batteriemoduls nach einem der Ansprüche 1 bis 11,
wobei die Wandstruktur ein integraler Bestandteil eines Batteriemodulgehäuses (96), das eine Vielzahl von Batteriezellen (80) und/oder eine Vielzahl von Batterieuntermodulen (90) aufnimmt und eine Grundplatte (97) aufweist, ist, und
wobei die erste Schicht (61) konfiguriert ist, um die zweite Schicht (62) von der Vielzahl der Batteriezellen (80) und/oder der Batterieuntermodule (90) elektrisch zu isolieren.

15. Eine Wandstruktur eines Batteriesystems (100) nach einem der Ansprüche 1 bis 11,
wobei die Wandstruktur ein integraler Bestandteil eines Batteriesystemgehäuses (101), das eine Vielzahl von Batteriezellen (80) und/oder eine Vielzahl von Batterieuntermodulen (90) und/oder zumindest ein Batteriemodul aufnimmt, ist, und
wobei die erste Schicht (61) konfiguriert ist, um die zweite Schicht (62) von der Vielzahl der Batteriezellen (80) und/oder der Batterieuntermodule (90) und/oder dem zumindest einen Batteriemodul elektrisch zu isolieren.

## Revendications

1. Structure de paroi (60) d'un boîtier (26, 30, 93, 96, 101) de l'un sélectionné parmi un élément de batterie (80), un sous-module de batterie (90), un module de batterie et un système de batterie (100), comprenant
une structure multicouche (60) ayant une première couche (61) faisant face à un côté interne (64) du boîtier (26, 93, 96, 101), une troisième couche (63) faisant face à un côté externe (65) du boîtier (26, 30, 93, 96, 101) et une deuxième couche (62) entre la première couche (61) et la troisième couche (63),
dans laquelle la première couche (61) est configurée pour isoler électriquement la deuxième couche (62) par rapport à une partie interne du boîtier (26, 30, 93, 96, 101), la deuxième couche (62) comprend un matériau ablatif et est configurée pour protéger thermiquement la troisième couche (63), et la troisième couche (63) comprend une conductivité thermique qui est supérieure à celle de la deuxième couche (62).

2. Structure de paroi selon la revendication 1, **caractérisée en ce que** le matériau ablatif de la deuxième couche (62) est configuré pour passer dans un processus d'ablation à une température inférieure à 600°C et/ou possède une température de décomposition inférieure à 600°C.

3. Structure de paroi selon la revendication 1 ou 2, **caractérisée en ce que** le matériau ablatif de la deuxième couche (62) est configuré pour passer dans un processus d'ablation en réponse à un arc électrique frappant la première couche (61).

4. Structure de paroi selon la revendication 2 ou 3, **caractérisée en ce que** le processus d'ablation comprend une pyrolyse ou une carbonisation d'un matériau de la deuxième couche (62).

5. Structure de paroi selon l'une quelconque des revendications précédentes, **caractérisée en ce que** la deuxième couche (62) est entièrement enfermée entre la première couche (61) et la troisième couche (63).

6. Structure de paroi selon l'une quelconque des revendications précédentes, **caractérisée en ce que** le matériau ablatif comprend l'un parmi le graphite, un phénolique renforcé par fibres de carbone, une résine époxy, des élastomères de silicone, le Téflon, le quartz, le liège et/ou le Nylon, ou un composite de ceux-ci.

7. Structure de paroi selon l'une quelconque des revendications précédentes, **caractérisée en ce que** la troisième couche (63) comprend un métal ou un alliage métallique.

8. Structure de paroi selon la revendication 6, **caractérisée en ce que** la troisième couche (63) comprend de l'aluminium, des alliages de fer (Fe), de carbone (C), de chrome (Cr) et de manganèse (Mn) et/ou des alliages de fer (Fe), de carbone (C), de chrome (Cr) et de nickel (Ni).

9. Structure de paroi (60) selon l'une quelconque des revendications précédentes, **caractérisée en ce que** la troisième couche (63) est configurée pour conférer une intégrité mécanique au boîtier (26, 30, 93, 96, 101).

10. Structure de paroi (60) selon l'une quelconque des revendications précédentes, **caractérisée en ce que** la troisième couche (61) comprend un matériau plastique renforcé par fibres.

11. Structure de paroi (60) selon l'une quelconque des revendications précédentes, **caractérisée en ce que** le matériau de la première couche (61) possède un point de fusion supérieur à 200°C.

12. Structure de paroi d'une cellule de batterie (80) selon l'une quelconque des revendications 1 à 11,
où la structure de paroi fait partie intégrante d'un boîtier de batterie (26) pour recevoir un ensemble électrode (10) ou d'un ensemble capuchon (30) pour sceller une ouverture du boîtier de batterie (26), et
dans laquelle la première couche (61) est configurée pour isoler électriquement la deuxième couche (62) par rapport à l'ensemble électrode (10).

13. Structure de paroi d'un sous-module de batterie (90) selon l'une quelconque des revendications 1 à 11,
où la structure de paroi fait partie intégrante d'un boîtier de sous-module de batterie (93) logeant une pluralité d'éléments de batterie alignés (80) et comprenant une paire de plaques frontales de sous-module (91) reliées à une pluralité de plaques latérales de sous-module (92), et
dans laquelle la première couche (61) est configurée pour isoler électriquement la deuxième couche (62) par rapport à la pluralité d'éléments de batterie (80).

14. Structure de paroi d'un module de batterie selon l'une quelconque des revendications 1 à 11,
dans laquelle la structure de paroi fait partie intégrante d'un boîtier de module de batterie (96) logeant une pluralité d'éléments de batterie (80) et/ou une pluralité de sous-modules de batterie (90) et comprenant une plaque de masse (97), et
dans laquelle la première couche (61) est configurée pour isoler électriquement la deuxième couche (62) par rapport à la pluralité d'éléments de batterie (80) et/ou de sous-modules de batterie (90).

15. Structure de paroi d'un système de batterie (100) selon l'une quelconque des revendications 1 à 11,
où la structure de paroi fait partie intégrante d'un système de batterie (101) logeant une pluralité d'éléments de batterie (80) et/ou une pluralité de sous-modules de batterie (90) et/ou au moins un module de batterie, et
dans laquelle la première couche (61) est configurée pour isoler électriquement la deuxième couche (62) par rapport à la pluralité d'éléments de batterie (80) et/ou de sous-modules de batterie (90) et/ou à l'au moins un module de batterie.
